# EUROPEAN PATENT SPECIFICATION

(11) **EP 3 795 382 B1**
(45) Date of publication and mention of the grant of the patent: **23.07.2025**
(21) Application number: 19803094.2
(22) Date of filing: 19.02.2019
(51) Int. Cl.: B60C 11/03, B60C 11/13, B60C 11/11

(54) **TWO-WHEELED VEHICLE TIRE**
REIFEN FÜR ZWEIRÄDRIGES FAHRZEUG
PNEU DE VÉHICULE DEUX ROUES

(30) Priority: 15.05.2018 JP 2018094141
(43) Date of publication of application: 24.03.2021
(73) Proprietor: Bridgestone Corporation, Chuo-Ku Tokyo 104-8340 (JP)
(72) Inventor: WAKABAYASHI, Tomoyuki, Tokyo 104-8340 (JP); TOKITOH, Yasufumi, Tokyo 104-8340 (JP)
(74) Representative: Marks & Clerk LLP
(86) International application number: PCT/JP2019/006129
(87) International publication number: WO 2019/220726

(56) References cited:
- EP-A1- 2 251 213
- EP-A1- 2 374 636
- JP-A- 2009 196 425
- JP-A- 2010 023 585
- JP-A- 2010 143 370
- JP-A- 2012 030 615
- JP-A- 2015 085 721
- JP-A- 2015 134 578
- JP-A- 2017 121 895
- US-A1- 2012 024 443

## Description

### TECHNICAL FIELD

The present invention relates to a two-wheeled vehicle tire (hereinafter, also simply referred to as "tire"). More specifically, the present invention relates to a two-wheeled vehicle tire, particularly a motorcycle tire, which pertains to an improvement of block-shaped land portions formed in a tread portion.

### BACKGROUND ART

Generally, two-wheeled vehicle tires for off-road travel, which are intended to be used on rough terrain such as sandy terrain and muddy terrain, include a tread portion that employs a block pattern composed of plural blocks. In order to attain desired performance in such tires, a variety of tread patterns have been proposed.

For example, Patent Document 1 discloses a motorcycle tire for off-road travel that includes a tread whose outer surface constitutes a tread surface, wherein the tread includes a main body and plural blocks protruding from the main body substantially outward in the radial direction, and at least one of the blocks has a projection extending in a rod shape on its side surface. Attention is also drawn to the disclosures of US2012/024443A1 and EP2251213A1.

### RELATED ART DOCUMENT

### PATENT DOCUMENT

[Patent Document 1] JP2017-121895A (Claims, etc.)

### SUMMARY OF THE INVENTION

### PROBLEMS TO BE SOLVED BY THE INVENTION

However, in two-wheeled vehicle tires used in motocross applications and the like, a further improvement in the traction performance during running has been desired.

In view of the above, an object of the present invention is to provide a two-wheeled vehicle tire that achieves a further improvement in the traction performance during running.

### MEANS FOR SOLVING THE PROBLEMS

The present inventors intensively studied to discover that the above-described problem can be solved by adopting the following constitution, thereby completing the present invention.

That is, the present invention is a two-wheeled vehicle tire as claimed in claim 1.

In the present invention, it is preferred that the stepped sections be formed at least on the center land portions.

Further, in the present invention, it is preferred that, with regard to the land portions provided with the stepped sections, a ratio h2/h1 of the height h2 from the stepped sections to the upper surfaces of the land portions and the height h1 of the land portions up to the stepped sections is in a range of 0.13 to 0.32.

### EFFECTS OF THE INVENTION

According to the present invention, a two-wheeled vehicle tire that achieves a further improvement in the traction performance during running can be realized.

### BRIEF DESCRIPTION OF THE DRAWINGS

[FIG. 1] FIG. 1 is a partial perspective view illustrating one example of a two-wheeled vehicle tire which is not according to the present invention, but is useful for understanding the present invention.
[FIG. 2] FIG. 2 is a partial cross-sectional view taken along a line A-A in FIG. 1.
[FIG. 3] FIG. 3 is a plan view relating to another specific example of a land portion on which stepped sections are formed.
[FIG. 4] FIG. 4 is a plan view relating to yet another specific example of a land portion on which stepped sections are formed.
**[****FIG. 5]** FIG. 5 is a partial perspective view illustrating an example of the two-wheeled vehicle tire of the present invention.
[FIG. 6] FIG. 6 is a partial cross-sectional view taken along a line B-B in FIG. 5.

### MODE FOR CARRYING OUT THE INVENTION

An embodiment of the present invention will now be described in detail referring to the drawings.

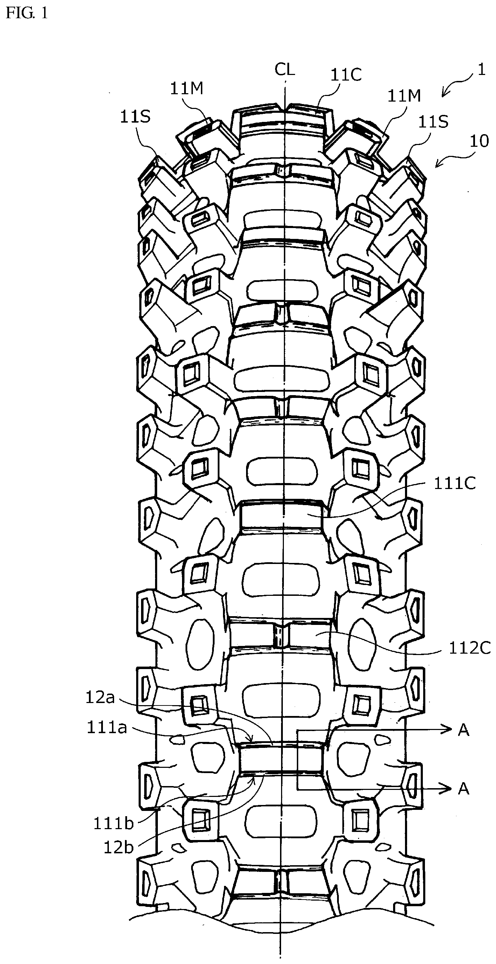

FIG. 1 is a partial perspective view illustrating one example of a two-wheeled vehicle tire which is not according to the present invention, but is useful for understanding the present invention. As illustrated, a two-wheeled vehicle tire 1 has a tread portion 10 formed in an annular shape, and a tread pattern constituted by plural block-shaped land portions is formed in the tread portion 10. The tread pattern of the illustrated tire is line-symmetric about a tire equator CL, and this tire has no designated rotational direction.

As illustrated, in the tire, the plural land portions in the tread portion 10 include: center land portions 11C which are arranged on the tire equator CL of the tread portion; middle land portions 11M which are arranged on the tire width-direction outer side of the center land portions 11C; and shoulder land portions 11S which are arranged on the tire width-direction outer side of the middle land portions 11M.

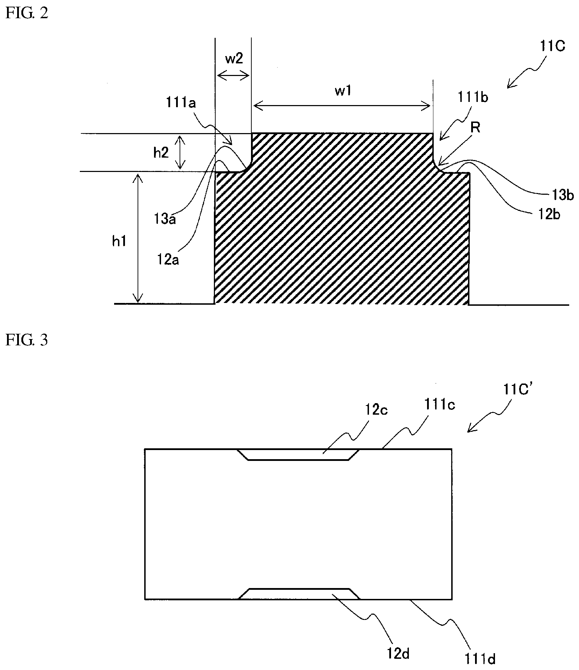

FIG. 2 is a partial cross-sectional view taken along a line A-A in FIG. 1. As illustrated, in the tire 1, for at least some of the plural land portions formed in the tread portion (for the center land portions 11C in the illustrated example), stepped sections 12a and 12b are formed on at least part of corners 111a and 111b which are located at the respective tire circumferential ends of the land portions (the stepped sections 12a and 12b are formed on the entirety of both corners 111a and 111b in the illustrated example). Further, it is important that a relationship h1 > h2 be satisfied when, as illustrated, the height of the land portions 11C provided with the stepped sections 12a and 12b up to the stepped sections 12a and 12b is defined as h1 and the height from the stepped sections 12a and 12b to the upper surfaces of the land portions 11C is defined as h2. By forming the stepped sections on at least part of the corners located at the respective tire circumferential ends of at least some of the plural land portions, the amount of edge components on the ground-contact surface can be increased, so that the traction performance can be improved.

By forming the stepped sections 12a and 12b on the center land portions 11C in the illustrated manner, the traction performance mainly in straight running can be improved. Further, by forming the stepped sections 12a and 12b on the middle land portions 11M and the shoulder land portions 11S, the traction performance mainly in turning can be improved. Therefore, the stepped sections 12a and 12b may be formed on any one of, a combination of two or more of, or all of the center land portions 11C, the middle land portions 11M and the shoulder land portions 11S. Preferably, the stepped sections 12a and 12b are formed at least on the center land portions 11C.

When the height of the land portions 11C provided with the stepped sections 12a and 12b up to the stepped sections 12a and 12b is defined as h1 and the height from the stepped sections 12a and 12b to the upper surfaces of the land portions 11C is defined as h2, it is required that the stepped sections 12a and 12b satisfy a relationship h1 > h2. When the heights h1 and h2 do not satisfy this relationship, the stepped sections do not come into contact with the ground during running; therefore, an edge effect is not exerted, and a traction performance-improving effect thus cannot be obtained. From the standpoint of obtaining a superior traction performance-improving effect, a ratio h2/h1 of the height h2 and the height h1 is preferably 0.13 or higher, more preferably 0.17 or higher, but preferably 0.32 or lower, more preferably 0.27 or lower.

Specific dimensions of the stepped sections are not particularly restricted and can be decided as appropriate in accordance with the shapes and the dimensions of the land portions to be arranged. For example, the height h2 from the stepped sections 12a and 12b to the upper surfaces of the land portions 11C may be in a range of 2 mm to 4 mm. When the height h2 is either excessively small or excessively large, the effect attributed to the formation of the stepped sections may not be sufficiently obtained. Further, the tire-circumferential-direction length w1 of the land portions 11C excluding the stepped sections 12a and 12b may be, for example, in a range of 15 mm to 20 mm, and the tire-circumferential-direction length w2 of the stepped sections 12a and 12b may be, for example, in a range of 2 mm to 4 mm. When the tire-circumferential-direction length w1 is excessively small, the effect attributed to the formation of the stepped sections may not be sufficiently obtained and, also when the tire-circumferential-direction length w2 is excessively small, the effect attributed to the formation of the stepped sections may not be sufficiently obtained.

The stepped sections are not restricted to be formed on both of the corners 111a and 111b located at the respective tire circumferential ends of the land portions 11C in the illustrated manner, and the stepped sections may be formed only on either one of the corners 111a and 111b. For example, when the stepped section 12a is formed only on the corner 111a which is one of the corners 111a and 111b located at the respective tire circumferential ends of the land portions 11C, the tire may be mounted in, as its designated rotational direction, such a direction that allows the side provided with the corner 111a comes into contact with the ground first during running. Meanwhile, with regard to the corners 111a and 111b located at the respective tire circumferential ends of the land portions 11C, when the stepped sections 12a and 12b are formed alternately on the land portions 11C that are adjacent to one another in the tire circumferential direction, i.e., when the land portions 11C on which the stepped section 12a is formed only at the corner 111a and the land portions 11C on which the stepped section 12b is formed only at the corner 111b are alternately arranged along the tire circumferential direction, the tire can be used without a designated rotational direction.

**FIG. 3** **is** a plan view relating to another specific example of a land portion on which stepped sections are formed. The stepped sections are not restricted to be formed on the entirety of the corners 111a and 111b located at the respective tire circumferential ends of the land portions 11C in the manner illustrated in FIG. 1, and the stepped sections may be formed as stepped sections 12c and 12d on a part of the corners 111c and 111d located at the respective tire circumferential ends of land portions 11C' in the manner illustrated in FIG. 3. A traction performance-improving effect can be obtained in this case as well. Further, when the stepped sections are formed on a part of both corners located at the respective tire circumferential ends of the land portions, the stepped sections in these corners may have different arrangement regions, and the arrangement region of each stepped section may be changed for each land portion, with no particular restriction.

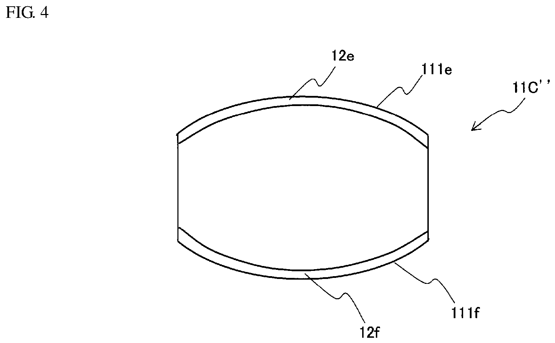

FIG. 4 is a plan view relating to yet another specific example of a land portion on which stepped sections are formed. As illustrated, with regard to a land portion 11C" on which stepped sections are formed, corners 111e and 111f which are located at the respective tire circumferential ends may be formed in a curved shape. In this case as well, the amount of edge components can be increased by forming stepped sections 12e and 12f on the corners 111e and 111f, respectively, and this can contribute to an improvement of the traction performance.

It is not necessary that the above-described stepped sections are formed to have a single step as illustrated, and the stepped sections may be formed to have two or more steps. In this case, when the height of the land portions, on which the stepped sections having two or more steps are formed, up to the lowest step is defined as h1, and the height from the lowest step to the upper surfaces of the respective land portions, i.e., a total height of each stepped section having two or more steps, is defined as hn, a relationship h1 > hn is satisfied. By this, the traction performance-improving effect, which is attributed to an increase in the amount of edge components, can be obtained.

Further, as illustrated in FIG. 2, the stepped sections 12a and 12b are preferably formed such that their inside corners 13a and 13b have an R shape. By this, on the land portions 11C, the occurrence of chipping initiated at the inside corners 13a and 13b can be inhibited.

What is important is that the above-described stepped sections are formed, and this enables to obtain the expected effects. The constitutions other than the stepped sections of the center land portions 11C, the middle land portions 11M and the shoulder land portions 11S are not particularly restricted and can be decided as appropriate based on the related art. In addition, the tread portion 10 may include other land portions in addition to the center land portions 11C, the middle land portions 11M and the shoulder land portions 11S and, when the tread portion 10 has other land portions, the above-described stepped sections may be formed on the other land portions as well.

For example, the center land portions 11C, the middle land portions 11M and the shoulder land portions 11S, which are arranged in plural numbers in the tire circumferential direction, may have different shapes and dimensions. In the illustrated example, the center land portions 11C are composed of land portions 111C which have a substantially rectangular shape, and land portions 112C which have a substantially rectangular shape and include a recess along the tire circumferential direction on the tire equator. The middle land portions 11M have a substantially rectangular shape and include a protruding part on the center in a shape analogous to their outlines, and a sipe is cut along the outline of this protruding part. Further, the shoulder land portions 11S have a substantially pentagonal shape and include a recess on the center in a shape analogous to their outlines.

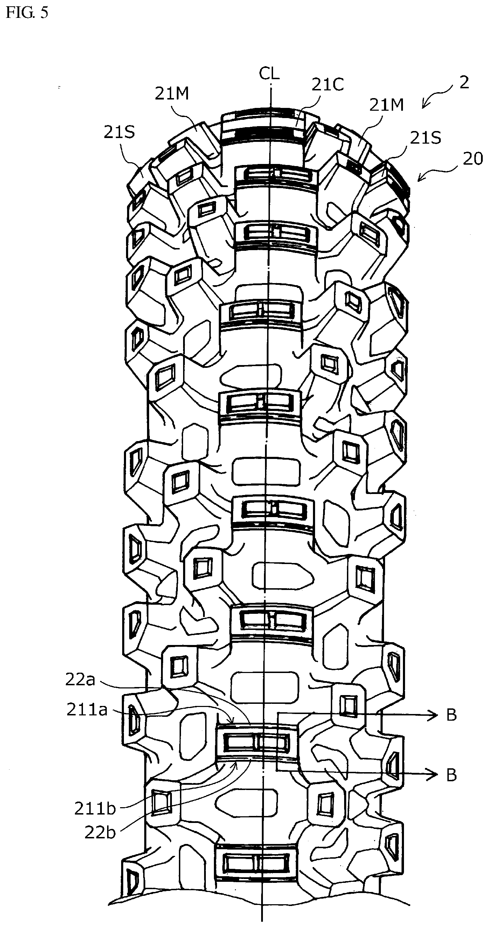

FIG. 5 is a partial perspective view illustrating an example of the two-wheeled vehicle tire, which is according to the present invention. The illustrated two-wheeled vehicle tire 2 of the present invention has a tread portion 20 formed in an annular shape, and a tread pattern constituted by plural block-shaped land portions is formed in the tread portion 20. The tread pattern of the illustrated tire is a bilaterally asymmetric pattern, and this tire also has no designated rotational direction.

The plural land portions in the illustrated tread portion 20 include: center land portions 21C which are arranged on the tire equator CL of the tread portion; middle land portions 21M which are arranged on the tire width-direction outer side of the center land portions 21C; and shoulder land portions 21S which are arranged on the tire width-direction outer side of the middle land portions 21M.

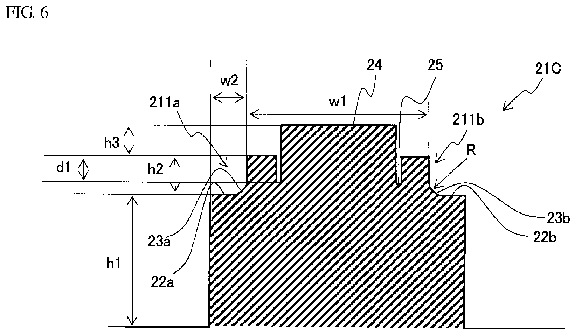

FIG. 6 is a partial cross-sectional view taken along a line B-B in FIG. 5. In the illustrated tire 2 as well, for at least some of the plural land portions formed in the tread portion (for the center land portions 21C in the illustrated example), stepped sections 22a and 22b are formed on at least part of corners 211a and 211b which are located at the respective tire circumferential ends of the land portions (the stepped sections 22a and 22b are formed on the entirety of both corners 211a and 211b in the illustrated example). Further, a relationship h1 > h2 is satisfied when, as illustrated, the height of the land portions 21C provided with the stepped sections 22a and 22b up to the stepped sections 22a and 22b is defined as h1 and the height from the stepped sections 22a and 22b to the upper surfaces of the land portions 21C is defined as h2. It is noted here that, even when the land portions 21C each have a protruding part 24, the term "upper surfaces of the land portions 21C" used herein means the upper surfaces of the land portions 21C themselves, not the upper surfaces of their protruding parts 24. In this case as well, by forming the stepped sections on at least part of the corners located at the respective tire circumferential ends of at least some of the plural land portions, the amount of edge components on the ground-contact surface can be increased, so that the traction performance can be improved.

Also in this case, the stepped sections 22a and 22b may be formed on any one of, a combination of two or more of, or all of the center land portions 21C, the middle land portions 21M and the shoulder land portions 21S. Preferably, the stepped sections 22a and 22b are formed at least on the center land portions 21C.

As described above, in the present invention, when the height of the land portions 21C provided with the stepped sections 22a and 22b up to the stepped sections 22a and 22b is defined as h1 and the height from the stepped sections 22a and 22b to the upper surfaces of the land portions 21C is defined as h2, it is required that the stepped sections satisfy a relationship h1 > h2. When the heights h1 and h2 do not satisfy this relationship, the stepped sections do not come into contact with the ground during running; therefore, an edge effect is not exerted, and a traction performance-improving effect thus cannot be obtained. Preferred conditions of the heights h1 and h2, the tire-circumferential-direction length w1 of the land portions 21C excluding the stepped sections 22a and 22b, and the tire circumferential-direction length w2 of the stepped sections 22a and 22b, as well as the conditions of, for example, the sites where the stepped sections are formed, are as described above. Moreover, also in the example illustrated in FIG. 6, the stepped sections 22a and 22b are formed such that their inside corners 23a and 23b have an R shape.

In this case, the protrusion height h3 of the protruding part 24 from the upper surface of each land portion 21C can be, for example, in a range of 0.5 mm to 2 mm, and the depth d1 of a sipe 25 cut into the upper surface of each land portion 21C can be, for example, in a range of 1.5 mm to 2.5 mm.

Further, also in this case, the center land portions 21C, the middle land portions 21M and the shoulder land portions 21S, which are arranged in plural numbers in the tire circumferential direction, may have different shapes and dimensions. In the illustrated example, the center land portions 21C have a substantially rectangular shape and include the protruding part 24 on the center in a shape analogous to their outlines. A sipe is cut along the outline of the protruding part 24, and this protruding part 24 has a shape that is divided by the sipe at the tire widthwise midpoint of each center land portion 21C. The middle land portions 11M have a substantially rectangular shape and include a protruding part on the center in a shape analogous to their outlines, and a sipe is cut along the outline of this protruding part. Further, the shoulder land portions 21S have a substantially pentagonal shape and include a protruding part on the center in a shape analogous to their outlines, and a sipe is cut along the outline of this protruding part.

The tire of the present invention can be configured in accordance with a conventional method and is not particularly restricted in terms of the tire internal structure, the member arrangement, the materials to be used, and the like.

For example, the tire of the present invention includes: at least one carcass ply as a skeleton; and side wall portions and bead portions, which are sequentially arranged on both tire radial-direction sides of a tread portion. The carcass ply is formed by arranging relatively high-elasticity textile cords in parallel to one another. The number of carcass plies may be one, two, or three or more. In the bead portions, the ends of each carcass ply may be folded around the respective bead cores from the inside to the outside of the tire and thereby anchored, or may be sandwiched by bead wires from both sides and thereby anchored, and either of these fixation methods may be employed.

In the tire of the present invention, at least one belt layer can be arranged on the tire radial-direction outer side of the carcass ply in the tread portion. The belt layer may be, for example, a spiral belt that is composed of a rubber-coated cord spirally wound along the tire circumferential direction. Examples of a reinforcing material constituting the belt layer include nylon fibers, aromatic polyamides (trade name: KEVLAR), and steel. Thereamong, aromatic polyamides and steel are reinforcing materials that do not elongate even at high temperatures and are thus capable of inhibiting swelling of the tread portion.

Further, in the tire of the present invention, bead fillers may be arranged on the tire radial-direction outer side of the respective bead cores, and an inner liner may be arranged as the innermost layer of the tire.

Still further, in the tire of the present invention, the tread portion may have a bilayer structure constituted by a cap rubber on the tread surface side and a base rubber on the tread bottom side, and the cap rubber and the base rubber may be different in hardness. By allowing the tread rubber to have such a bilayer structure constituted by a cap rubber and a base rubber that are different in hardness, necessary properties can be ensured without modifying the rigidity of the blocks as a whole by adopting, for example, a combination of a hard cap rubber and a soft base rubber, or a combination of a soft cap rubber or a hard base rubber, in accordance with the road surface conditions. The hardness of the cap rubber and that of the base rubber can be adjusted by appropriately selecting a rubber composition and a filler thereof in accordance with a conventional method.

The tire of the present invention can be suitably used as a tire for motocross that is intended to be used on rough terrain including muddy terrain. The tire of the present invention is particularly suitable as a rear tire.

### EXAMPLES

The present invention will now be described in more detail by way of Examples thereof.

### (Example 1)

A motorcycle tire of Example 1 which, as illustrated in FIGs. 1 and 2, included a tread portion formed in an annular shape and had plural land portions formed in the tread portion, was produced. As illustrated, center land portions arranged on the tire equator, middle land portions arranged on the tire width-direction outer side of the center land portions, and shoulder land portions arranged on the tire width-direction outer side of the middle land portions were formed in the tread portion. On the center land portions, stepped sections were formed on the entirety of both corners located at the respective tire circumferential ends, and the height h1 of the land portions provided with the stepped sections up to the stepped sections and the height h2 from the stepped sections to the upper surfaces of the land portions satisfied a relationship h1 > h2. Further, the stepped sections were formed such that their inside corners had an R shape.

### (Conventional Example 1)

A tire of Conventional Example 1 was produced in the same manner as in Example 1, except that no stepped section was formed on the center land portions.

### (Example 2)

A motorcycle tire of Example 2 which, as illustrated in FIGs. 5 and 6, included a tread portion formed in an annular shape and had plural land portions formed in the tread portion, was produced. As illustrated, center land portions arranged on the tire equator, middle land portions arranged on the tire width-direction outer side of the center land portions, and shoulder land portions arranged on the tire width-direction outer side of the middle land portions were formed in the tread portion. On the center land portions, stepped sections were formed on the entirety of both corners located at the respective tire circumferential ends, and the height h1 of the land portions provided with the stepped sections up to the stepped sections and the height h2 from the stepped sections to the upper surfaces of the land portions satisfied a relationship h1 > h2. Further, the stepped sections were formed such that their inside corners had an R shape.

### (Conventional Example 2)

A tire of Conventional Example 2 was produced in the same manner as in Example 2, except that no stepped section was formed on the center land portions.

The test tires of Examples and Conventional Examples were each mounted as a rear tire of a motocross motorcycle. A running test was conducted by a test rider, and the traction performance during the test run was evaluated based on the rider's feel. As a result, the test tires of Examples 1 and 2 were confirmed to each have an improved traction performance during running as compared to the test tires of Conventional Examples 1 and 2.

### DESCRIPTION OF SYMBOLS

1, 2: two-wheeled vehicle tire
10, 20: tread portion
11C, 21C: center land portion
11M, 21M: middle land portion
11S, 21S: shoulder land portion
11C', 11C": land portion
12a, 12b, 12c, 12d, 12e, 12f, 22a, 22b: stepped section
13a, 13b, 23a, 23b: inside corner
24: protruding part
25: sipe
111a, 111b, 111c, 111d, 111e, 111f, 211a, 211b: corner
111C: land portion having substantially rectangular shape
112C: land portion having substantially rectangular shape and recess along the tire circumferential direction on tire equator
CL: tire equator
h1: height of land portion provided with stepped sections up to the stepped sections
h2: height from stepped sections to upper surface of land portion
h3: protrusion height of protruding part from upper surface of land portion
d1: depth of sipe cut into upper surface of land portion
w1: tire-circumferential-direction length of land portion excluding stepped sections
w2: tire-circumferential-direction length of stepped sections

## Claims

1. A two-wheeled vehicle tire (2), comprising a tread portion (20) formed in an annular shape,
wherein
plural land portions (21C, 21M, 21S) are formed in the tread portion (20),
the plural land portions (21C, 21M, 21S) comprises: center land portions (21C) arranged on a tire equator (CL) of the tread portion (20); middle land portions (21M) arranged on the tire width-direction outer side of the center land portions (21C); and shoulder land portions (21S) arranged on the tire width-direction outer side of the middle land portions (21M),
for at least some of the plural land portions (21C), stepped sections (22a, 22b) are formed on at least part of corners (211a, 211b) located at the respective tire circumferential ends of the land portions (21C),
when the height of the land portions (21C) provided with the stepped sections (22a, 22b) up to the stepped sections (22a, 22b) is defined as h1 and the height from the stepped sections (22a, 22b) to the upper surfaces of the land portions (21C) is defined as h2, a relationship h1 > h2 is satisfied, **characterized in that**
the center land portions (21C) each include a protruding part (24) on the center in plan view in a shape analogous to its outline, and a sipe (25) is cut along the outline of the protruding part (24), and the protrusion height (h3) of the protruding part (24) of each center land portion (21C) from the upper surface of each center land portion (21C) is in a range of 0.5 mm to 2 mm,
the depth of the sipe (25) cut into the upper surface of each center land portion (21C) is in a range of 1.5 mm to 2.5 mm,
the center land portions (21C) have a substantially rectangular shape and include the protruding part (24) on the center in a shape analogous to their outlines, and this protruding part (24) has a shape that is divided by the sipe (25) at the tire widthwise midpoint of each center land portion (21C),
the middle land portions (21M) have a substantially rectangular shape and include a protruding part on the center in plan view in a shape analogous to their outlines, and a sipe is cut along the outline of this protruding part, and
the shoulder land portions (21S) have a substantially pentagonal shape and include a protruding part on the center in plan view in a shape analogous to their outlines, and a sipe is cut along the outline of this protruding part.

2. The two-wheeled vehicle tire (2) according to claim 1, wherein the stepped sections (22a, 22b) are formed at least on the center land portions (21C).

3. The two-wheeled vehicle tire (2) according to claim 1 or 2, wherein, with regard to the land portions (21C) provided with the stepped sections (22a, 22b), a ratio h2/h1 of the height h2 from the stepped sections (22a, 22b) to the upper surfaces of the land portions (21C) and the height h1 of the land portions (21C) up to the stepped sections (22a, 22b) is in a range of 0.13 to 0.32.

## Patentansprüche

1. Reifen (2) für ein zweirädriges Fahrzeug, der einen in einer ringförmigen Form geformten Laufflächenabschnitt (20) umfasst,
wobei
mehrere Stegabschnitte (21C, 21M, 21S) in dem Laufflächenabschnitt (20) geformt sind,
die mehreren Stegabschnitte (21C, 21M, 21S) Folgendes umfassen: zentrale Stegabschnitte (21C), die an einem Reifenäquator (CL) des Laufflächenabschnitts (20) angeordnet sind; mittlere Stegabschnitte (21M), die in der Reifenbreitenrichtung an der äußeren Seite der mittleren Stegabschnitte (21C) angeordnet sind; und Schulterstegabschnitte (21S), die in der Reifenbreitenrichtung an der äußeren Seite der mittleren Stegabschnitte (21M) angeordnet sind,
für mindestens einige der mehreren Stegabschnitte (21C) gestufte Teilbereiche (22a, 22b) an mindestens einem Teil von Ecken (211a, 211b) geformt sind, die sich an den jeweiligen Reifenumfangsenden der Stegabschnitte (21C) befinden,
wenn die Höhe der mit den gestuften Teilbereichen (22a, 22b) versehenen Stegabschnitte (21C) bis zu den gestuften Teilbereichen (22a, 22b) als h1 definiert ist und die Höhe von den gestuften Teilbereichen (22a, 22b) zu den oberen Oberflächen der Stegabschnitte (21C) als h2 definiert ist, eine Beziehung h1 > h2 erfüllt ist, **dadurch gekennzeichnet, dass**
die zentralen Stegabschnitte (21C) in einer Draufsicht jeweils einen vorspringenden Teil (24) im Zentrum in einer Form analog zu seinem Umriss einschließen, und eine Lamelle (25) entlang des Umrisses des vorspringenden Teils (24) geschnitten ist, und die Vorsprungshöhe (h3) des vorspringenden Teils (24) jedes zentralen Stegabschnitts (21C) von der oberen Oberfläche jedes zentralen Stegabschnitts (21C) in einem Bereich von 0,5 mm bis 2 mm liegt,
die Tiefe der in die obere Oberfläche jedes zentralen Stegabschnitts (21C) geschnittenen Lamelle (25) in einem Bereich von 1,5 mm bis 2,5 mm liegt,
die zentralen Stegabschnitte (21C) eine im Wesentlichen rechteckige Form aufweisen und den vorspringenden Teil (24) im Zentrum in einer Form analog zu ihren Umrissen einschließen, und dieser vorspringende Teil (24) eine Form aufweist, die durch die Lamelle (25) am Mittelpunkt der Reifenbreite nach eines jeden zentralen Stegabschnitts (21C) geteilt wird,
die mittleren Stegabschnitte (21M) eine im Wesentlichen rechteckige Form aufweisen und in einer Draufsicht einen vorspringenden Teil im Zentrum in einer Form analog zu ihren Umrissen einschließen, und eine Lamelle entlang des Umrisses dieses vorspringenden Teils geschnitten ist, und
die Schulterstegabschnitte (21S) eine im Wesentlichen fünfeckige Form aufweisen und in einer Draufsicht einen vorspringenden Teil im Zentrum in einer Form analog zu ihren Umrissen einschließen, und eine Lamelle entlang des Umrisses dieses vorspringenden Teils geschnitten ist.

2. Reifen (2) für ein zweirädriges Fahrzeug nach Anspruch 1, wobei die gestuften Teilbereiche (22a, 22b) mindestens an den zentralen Stegabschnitten (21C) geformt sind.

3. Reifen (2) für ein zweirädriges Fahrzeug nach Anspruch 1 oder 2, wobei in Bezug auf die mit den gestuften Teilbereichen (22a, 22b) versehenen Stegabschnitte (21C) ein Verhältnis h2/h1 der Höhe h2 von den gestuften Teilbereichen (22a, 22b) zu den oberen Oberflächen der Stegabschnitte (21C) und der Höhe h1 der Stegabschnitte (21C) bis zu den gestuften Teilbereichen (22a, 22b) in einem Bereich von 0,13 bis 0,32 liegt.

## Revendications

1. Pneu pour véhicule à deux roues (2), comprenant une partie de bande de roulement (20) formée en une forme annulaire,
dans lequel
plusieurs parties d'appui (21C, 21M, 21S) sont formées dans la partie de bande de roulement (20),
les plusieurs parties d'appui (21C, 21M, 21S) comprennent : des parties d'appui centrales (21C) disposées sur un équateur du pneu (CL) de la partie de bande de roulement (20), des parties d'appui intermédiaires (21M) disposées sur le côté extérieur, dans la direction de largeur du pneu, des parties d'appui centrales (21C), et des parties d'appui d'épaulement (21S) disposées sur le côté extérieur dans le sens de la largeur du pneu des parties d'appui intermédiaires (21M),
pour au moins certaines des plusieurs parties d'appui (21C), des sections étagées (22a, 22b) sont formées sur au moins une partie de coins (211a, 211b) situés aux extrémités circonférentielles de pneu respectives des parties d'appui (21C),
si la hauteur des parties d'appui (21C) dotées de sections étagées (22a, 22b) jusqu'au niveau des sections étagées (22a, 22b) est définie comme h1 et la hauteur allant des sections étagées (22a, 22b) jusqu'aux surfaces supérieures des parties d'appui (21C) est définie comme h2, une relation h1 > h2 est satisfaite, **caractérisé en ce que**
les parties d'appui centrales (21C) incluent chacune une partie saillante (24) au centre dans une vue en plan en une forme analogue à son contour, et une lamelle (25) est découpée le long du contour de la partie saillante (24), et la hauteur de saillie (h3) de la partie saillante (24) de chaque partie d'appui centrale (21C) à partir de la surface supérieure de chaque partie d'appui centrale (21C) est dans une plage allant de 0,5 mm à 2 mm,
la profondeur de la lamelle (25) découpée dans la surface supérieure de chaque partie d'appui centrale (21C) est dans une plage allant de 1,5 mm à 2,5 mm,
les parties d'appui centrales (21C) ont une forme sensiblement rectangulaire et incluent la partie saillante (24) au centre en une forme analogue à leurs contours, et cette partie saillante (24) a une forme qui est divisée par la lamelle (25) au niveau du point médian, dans le sens de la largeur du pneu, de chaque partie d'appui centrale (21C),
les parties d'appui intermédiaires (21M) ont une forme sensiblement rectangulaire et incluent une partie saillante au centre dans une vue en plan en une forme analogue à leurs contours, et une lamelle est découpée le long du contour de cette partie saillante, et
les parties d'appui d'épaulement (21S) ont une forme sensiblement pentagonale et incluent une partie saillante au centre dans une vue en plan en une forme analogue à leurs contours, et une lamelle est découpée le long du contour de cette partie saillante.

2. Pneu pour véhicule à deux roues (2) selon la revendication 1, dans lequel les sections étagées (22a, 22b) sont formées au moins sur les parties d'appui centrales (21C).

3. Pneu pour véhicule à deux roues (2) selon la revendication 1 ou 2, dans lequel, concernant les parties d'appui (21C) dotées des sections étagées (22a, 22b), un rapport h2/h1 entre la hauteur h2 des sections étagées (22a, 22b) jusqu'aux surfaces supérieures des parties d'appui (21C) et la hauteur h1 des parties d'appui (21C) jusqu'aux sections étagées (22a, 22b) est dans une plage allant de 0,13 à 0,32.
